# EUROPÄISCHE PATENTSCHRIFT

(11) **EP 3 785 542 B1**
(45) Veröffentlichungstag und Bekanntmachung des Hinweises auf die Patenterteilung: **21.02.2024**
(21) Anmeldenummer: 19194727.4
(22) Anmeldetag: 30.08.2019
(51) Int. Cl.: A22C 11/02, A22C 7/00, A23P 20/20, A23L 13/60, A23L 13/00

(54) **VERFAHREN ZUR HERSTELLUNG EINES GESCHICHTETEN NAHRUNGSMITTELS**
METHOD FOR MANUFACTURING A LAYERED FOOD PRODUCT
PROCÉDÉ DE FABRICATION D'UN PRODUIT ALIMENTAIRE EN COUCHES

(43) Veröffentlichungstag der Anmeldung: 03.03.2021
(60) Teilanmeldung: 20199060.3
(73) Patentinhaber: Herbert Ospelt Anstalt, 9487 Bendern (LI)
(72) Erfinder: Ospelt, Alexander, 9487 Bendern (LI)
(74) Vertreter: Kaminski Harmann

(56) Entgegenhaltungen:
- EP-A1- 0 303 260
- EP-A2- 0 855 139
- EP-A2- 2 218 331
- WO-A1-2007/108674
- WO-A1-2017/213496
- DE-A1- 10 058 377
- DE-T2-602004 012 822
- US-A- 4 195 489
- US-A1- 2010 119 659
- US-B1- 8 353 742
- US-B2- 7 156 635

## Beschreibung

### GEBIET DER ERFINDUNG

Die vorliegende Erfindung betrifft ein Verfahren zur Herstellung eines geschichteten Nahrungsmittels.
Die EP 0 855 139 A1 betrifft ein Verfahren zur Herstellung eines Nahrungsmittelprodukts auf Basis von Fleisch oder Eiweißstoffen tierischen oder pflanzlichen Ursprungs bei dem man in einem ersten Arbeitsgang aus den Ausgangsstoffen durch Zerkleinerung ein Brät herstellt und in einem weiteren Schritt dieses Brät dann in eine Abfüllvorrichtung gegeben wird, aus der das Brät dann in einem Strang oder mehreren parallelen Strängen austritt. Danach wird das Brät gegart, z. B. in einem Tunnel mittels eines Heißluftgebläses und dann werden die Stränge des Bräts durch eine Schneidvorrichtung in Streifen gewünschter Länge geschnitten, wobei sie anschließend unmittelbar tiefgefroren und verpackt werden können. Ziel des hier offenbarten Verfahrens ist es, ein Nahrungsmittelprodukt auf Fleischbasis herzustellen, das beispielsweise etwa die Größe und Form von Pommes Frites haben kann, das bereits vorgegart ist und als Fast-Food-Produkt durch den Verbraucher in einem weiteren kurzen Garvorgang z. B. in einem Backofen, durch Frittieren, in einer Mikrowelle oder dergleichen gegart werden und danach warm gegessen werden kann.

### ZUSAMMENFASSUNG DER ERFINDUNG

Die Erfindung betrifft ein Verfahren zur Herstellung eines geschichteten Nahrungsmittels, welches die folgenden Schritte aufweist:
Wolfen einer Menge rohen Fleischs in einem Fleischwolf zu einem ersten Fleischerzeugnis,
Herstellen eines zweiten Fleischerzeugnisses durch Vermischen des ersten Fleischerzeugnisses mit einer Gewürzzusammensetzung,
Einfüllen des zweiten Fleischerzeugnisses in einen Einfülltrichter einer Vakuumfüllmaschine,
Verdichten des zweiten Fleischerzeugnisses in der Vakuumfüllmaschine,
Befördern des zweiten Fleischerzeugnisses als drittes Fleischerzeugnis zu einem Füllstromteiler unter einem Druck, der von einer Drehschieberpumpe in der Vakuumfüllmaschine bereitgestellt wird,
Aufteilen des dritten Fleischerzeugnisses in mindestens zwei Stränge eines vierten Fleischerzeugnisses im Füllstromteiler,
Ausscheiden der Stränge aus dem Füllstromteiler als fünfte Fleischerzeugnisse, welche jeweils ein rechteckiges Profil aufweisen,
Ablegen der fünften Fleischerzeugnisse auf einem Gitterblech,
Herstellen sechster Fleischerzeugnisse durch Portionieren der fünften Fleischerzeugnisse mit einem Schneidwerkzeug auf eine Länge, die zwischen 50 und 110% der Länge des Gitterblechs entspricht,
Einlagern des die sechsten Fleischerzeugnisse tragenden Gitterblechs in eine Reifekammer,
Bereitstellen einer ersten Temperatur und einer Feuchtigkeit in der Reifekammer, wobei die erste Temperatur in einem ersten definierten Temperaturbereich liegt und wobei die Feuchtigkeit in einem definierten Feuchtigkeitsbereich liegt,
Reifen der sechsten Fleischerzeugnisse zu siebten Fleischerzeugnissen über eine Reifedauer hinweg, die in einem ersten definierten zeitlichen Bereich liegt,
Portionieren der siebten Fleischerzeugnisse in eine Vielzahl quaderförmiger achter Fleischerzeugnisse,
Bereitstellen zweier Backwareneinheiten, wobei jedes der Backwareneinheiten eine Grundfläche aufweist, die zwischen 80 und 120% der Grundfläche eines achten Fleischerzeugnisses entspricht,
eines von:
   Herstellen neunter Fleischerzeugnisse durch Applizieren eines Klebers auf den achten Fleischerzeugnissen,
   Herstellen zweier beschichteter Backwareneinheiten durch jeweiliges Applizieren eines Klebers auf eine Grundfläche einer Backwareneinheit,
   Positionieren eines der achten bzw. neunten Fleischerzeugnisses zwischen den zwei Backwareneinheiten bzw. beschichteten Backwareneinheiten, so dass der Kleber jeweils zwischen einer Backwareneinheit und dem neunten Fleischerzeugnis bzw. zwischen einer beschichteten Backwareneinheit und dem achten Fleischerzeugnis angeordnet ist,
   Zusammenpressen der zwei das neunte Fleischerzeugnis umgebenden Backwareneinheiten bzw. der zwei das achte Fleischerzeugnis umgebenden beschichteten Backwareneinheiten mit einer definierten Kraft und für eine Zusammenpressdauer, die in einem zweiten definierten zeitlichen Bereich liegt.

Weiterhin kann das Verfahren den Schritt aufweisen: gewichtsbezogenes Vergleichmässigen des dritten Fleischerzeugnisses im Füllstromteiler.

Das Vergleichmässigen kann basierend auf einer Verwendung einer Paddel-Mischwelle und/oder einer Spiral-Mischwelle erfolgen.

Das Vergleichmässigen kann basierend auf einer Verwendung zumindest einer integrierten Wiegezelle erfolgen.

Weiterhin kann das Verfahren den Schritt aufweisen: Temperieren des dritten Fleischerzeugnisses im Füllstromteiler auf eine zweite Temperatur, die in einem zweiten definierten Temperaturbereich liegt.

Weiterhin kann das Verfahren den Schritt aufweisen: durch Reibung während des Beförderns des dritten Fleischerzeugnisses erzeugtes Aussondern von Proteinen aus dem dritten Fleischerzeugnis.

Weiterhin kann das Verfahren den Schritt aufweisen: Bereitstellen eines Räuchergases in der Reifekammer zumindest während eines Teils der Reifedauer.

Das Applizieren des Klebers kann ein Tunken der achten Fleischerzeugnisse in einem Kleberbad und/oder ein Besprühen und/oder ein Benetzen der achten Fleischerzeugnisse mit einem Klebersprühnebel umfassen.

Der Kleber enthält in einer Ausführungsform Gelatine.

Der Kleber kann weiterhin Genuss-Säure enthalten, insbesondere zusätzlich Konservierungsstoffe.

Der Kleber ist insbesondere frei von Farbstoffen, Aromen, Geschmacksverstärkern und gentechnisch veränderten Lebensmitteln.

Weiterhin kann das Verfahren den Schritt aufweisen: Temperieren des Klebers auf eine dritte Temperatur, die in einem dritten definierten Temperaturbereich liegt.

Nicht zur vorliegenden Erfindung gehörend, aber dennoch offenbart ist weiterhin eine Produktionslinie zur Veredelung eines Fleischerzeugnisses, wobei die Produktionslinie aufweist:
eine Vakuumfüllmaschine mit einem Einfülltrichter und einer Drehschieberpumpe,
einen Füllstromteiler,
eine Rohrleitung, die von der Vakuumfüllmaschine zum Füllstromteiler führt,
wobei die Rohrleitung als ein Rohr mit einer Länge ausgeführt ist, die in einem Bereich von zwischen 1 und 5 Metern liegt, insbesondere 2-3 Metern, gewählt ist, und wobei der Füllstromteiler eine Heizeinheit aufweist, die dazu ausgebildet ist, das durch den Füllstromteiler geleitete Fleischerzeugnis auf eine Temperatur zu temperieren, die in einem definierten Temperaturbereich liegt.

Der Füllstromteiler weist insbesondere eine Paddel-Mischwelle und/oder eine Spiral-Mischwelle auf.

Der Füllstromteiler weist insbesondere eine integrierte Wiegezelle auf.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 zeigt eine Produktionslinie, die für das erfindungsgemässe Verfahren verwendet werden kann;
Figur 2 zeigt fünfte und sechste Fleischerzeugnisse als Zwischenprodukte einer Ausführungsform des erfindungsgemässen Verfahrens;
Figur 3 zeigt sechste und siebte Fleischerzeugnisse als Zwischenprodukte einer Ausführungsform des erfindungsgemässen Verfahrens;
Figur 4 zeigt siebte und achte Fleischerzeugnisse als Zwischenprodukte einer Ausführungsform des erfindungsgemässen Verfahrens;
Figuren 5 und 6 zeigen achte und neunte Fleischerzeugnisse als Zwischenprodukte einer Ausführungsform des erfindungsgemässen Verfahrens;
Figur 7 zeigt Backwareneinheiten und eine beschichtete Backwareneinheit als Zwischenprodukte einer Ausführungsform des erfindungsgemässen Verfahrens;
Figur 8 zeigt die Herstellung des geschichteten Nahrungsmittels und das geschichtete Nahrungsmittel selbst;

### DETAILLIERTE BESCHREIBUNG DER ZEICHNUNGEN

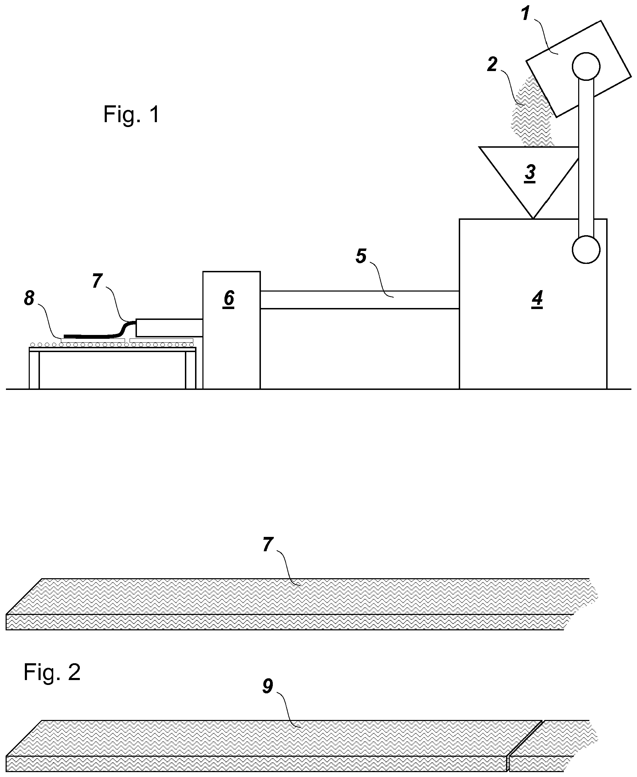

Figur 1 zeigt eine Produktionslinie, anhand derer einige Schritte des erfindungsgemässen Verfahrens im Folgenden erläutert werden.

Über einen Behälter 1 wird eine Menge zweiten Fleischerzeugnisses 2 in den Einfülltrichter 3 der Vakuumfüllmaschine 4 eingefüllt. Das zweite Fleischerzeugnis 2 ist insbesondere Brät, welches zuvor aus einem ersten Fleischerzeugnis und einer Gewürzzusammensetzung entsteht (jeweils nicht dargestellt). Das erste Fleischerzeugnis ist zerkleinertes (gewolftes) rohes Fleisch von zulässigen Tierarten nach Art. 2 Verordnung des Eidgenössischen Departements des Innern (EDI) über Lebensmittel tierischer Herkunft (VLtH), insbesondere Schweinespeck, Schweinefleisch und/oder Rindfleisch (nicht dargestellt). Die Gewürzzusammensetzung kann auch technische Hilfsstoffe beinhalten.

Das zweite Fleischerzeugnis 2 wird in der Vakuumfüllmaschine 4 durch eine Drehschieberpumpe (nicht dargestellt) verdichtet und in eine Rohrleitung 5 befördert, über welche es an einen Füllstromteiler 6 gelangt. Die Rohrleitung 5 ist insbesondere derart lang, dass dort Proteinausscheidungsprozesse stattfinden. Die dadurch entstehende Schmierwirkung ist normalerweise unerwünscht, da sie zu Verklebungen und damit zu Prozessunterbrechungen führen kann. Die erfinderische Prozesslinie und ein Aspekt des erfinderischen Verfahrens jedoch machen sich diesen Effekt bewusst zu Nutze. Verklebungen können verhindert werden, indem der Füllstromteiler 6 insbesondere eine Heizeinheit aufweist, mit der das dritte Fleischerzeugnis auf einem bestimmten Temperaturniveau gehalten wird und die Masse somit geschmeidig bleibt und nicht verklebt. Dazu hat die-Rohrleitung 5 bevorzugt eine Länge von etwa ein bis fünf Metern, insbesondere zwei bis drei Metern, insbesondere ungefähr drei Metern.

Der Füllstromteiler 6 teilt das dritte Fleischerzeugnis auf in mindestens zwei, insbesondere fünf bis zehn, im Speziellen acht Teilstränge, im Folgenden vierte Fleischerzeugnisse 7 genannt. Im Inneren des Füllstromteilers 6 werden die Teilstränge vergleichmässigt, wobei dies insbesondere auf einer Gewichtsdetektion und/oder auf einer Volumendetektion erfolgen kann. Hierzu können sogenannte Paddel- und/oder Spiral-Mischwellen, bzw. Wiegezellen eingesetzt werden.

Die vierten Fleischerzeugnisse wurden durch eine Matrize mit rechteckigem Profil aus dem Füllstromteiler 6 als fünfte Fleischerzeugnisse 7 auf einem Gitterblech 8 abgelegt, welches auf einem Rollband mit der Ausflussgeschwindigkeit des fünften Fleischerzeugnisses 7 Schritthalten kann. Das Gitterblech 8 kann, muss aber nicht, vor dem Belegen eingefettet werden, dies etwa mit einem Sprühnebel aus Antihaftmittel. Speziell ist, dass das fünfte Fleischerzeugnis 7 nicht in eine Umhüllung (z.B. Naturdarm) gegeben wird. Das Gitterblech 8 weist insbesondere eine spezielle Maschung des Gitters auf, welche dafür sorgt, dass möglichst wenig Auflagefläche besteht und dennoch die Form der noch weichen fünften Fleischerzeugnisse 7 erhalten bleibt.

Figur 2 zeigt, dass das fünfte Fleischerzeugnis 7 auf Länge geschnitten wird, d.h. quer zur Ausflussrichtung. Insbesondere kann dies durch ein entsprechend langes Schneidemittel für alle Stränge gleichzeitig erfolgen, womit auch sichergestellt wird, dass alle Stränge die gleiche Länge haben. Die nun auf Länge geschnittenen, quaderförmigen Stränge werden im Folgenden sechste Fleischerzeugnisse 9 genannt.

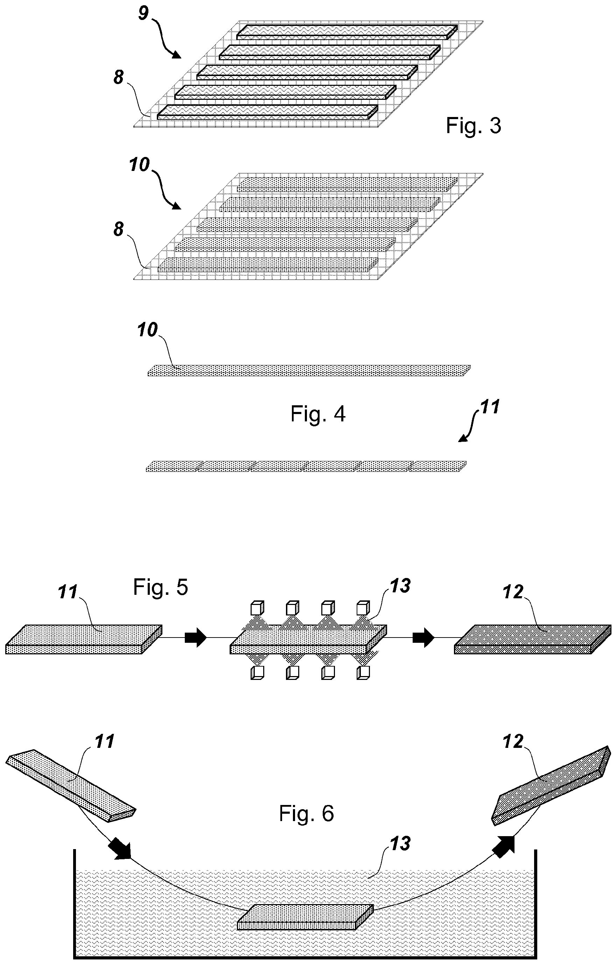

Das Verhältnis aus Blechgrösse und Schnittlänge ist so gewählt, dass das Gitterblech 8 gut ausgenutzt wird, aber dennoch ein Sicherheitsabstand zum Rand des Gitterblechs 8, siehe Figur 3. Das derartig beladene Gitterblech 8 wird nun in eine Reifekammer gegeben, in welcher die sechsten Fleischerzeugnisse 9 getrocknet bzw. gereift werden können. Bei speziell eingestellter Temperatur und Luftfeuchtigkeit, bzw. Temperatur- und/oder Luftfeuchtigkeits-Verläufen, reifen die sechsten Fleischerzeugnisse 9 zu siebten Fleischerzeugnissen 10. Die sechsten Fleischerzeugnisse 9 haben auf dem Blech 8 auch einen speziell definierten Querabstand voneinander, der bevorzugt für den Reifeprozess berücksichtigt wird. Der Reifeprozess dauert in etwa zwei bis fünf Tage, insbesondere drei bis vier Tage. Ähnliches gilt für die Dimensionen des rechteckigen Profils der sechsten Fleischerzeugnisse 9. In einer Ausführungsform können die Fleischerzeugnisse in der Reifekammer oder in einer Räucherkammer auch Rauch ausgesetzt werden.

Sind die sechsten Fleischerzeugnisse 9 zu siebten Fleischerzeugnissen 10 gereift, werden sie in gleichgrosse Quader geschnitten, siehe Figur 4. Diese Zuschnitte werden im Folgenden achte Fleischerzeugnisse 11 genannt. Selbstverständlich wird die Wahl der Grösse des Gitterblechs 8 und der Schnittlänge der sechsten Fleischerzeugnisse 9 bereits derart gewählt, dass beim Zuschnitt der siebten Fleischerzeugnissen 10 zu achten Fleischerzeugnissen 11 möglichst wenig Reste übrigbleiben. Hierbei wird auch die durch Wasserentzug bewirkte Schrumpfung beim Reifeprozess berücksichtigt. Die Quader der achten Fleischerzeugnisse 11 haben etwa eine Grundfläche im Bereich zwischen 10x5 cm bis 8x3 cm, insbesondere 9x4 cm. Die Dicke beträgt etwa 2 bis 10 mm, insbesondere etwa 5 mm. Das Gewicht beträgt etwa 20 bis 40 Gramm, insbesondere 30 Gramm.

Um das Fleischerzeugnis zwischen zwei Backwareneinheiten, insbesondere Brotscheiben, zu befestigen, wird ein Kleber eingesetzt. Dieser kann initial am Fleischerzeugnis oder an den Backwareneinheiten angebracht werden. Der Kleber 13 enthält bevorzugt kollagenes Eiweiss, d.h. Gelatine, insbesondere zusätzlich einen Anteil von Genuss-Säuren (insbesondere weiterhin zusätzlich Konservierungsstoffe), welches die geschmacklichen Eigenschaften, die Stabilität des Klebers und die Haltbarkeit nochmals verbessert. Ein Effekt des Klebers ist, dass die Fleischerzeugnisse eine glänzende Oberfläche erhalten, wodurch die Ästhetik des Produkts verbessert wird. Der Kleber 13 wird insbesondere durch eine Temperierung auf etwa 50 bis 80°C, insbesondere 60 bis 70°C, in einem flüssigen Aggregatzustand gehalten, wobei ein Abfallen der Temperatur auf Raumtemperatur dazu führt, dass der Kleber 13 erstarrt. Die Applikation des Klebers dauert insbesondere etwa 1.5 bis 3 Sekunden, damit sich die jeweilige Oberfläche gut mit dem Kleber verbinden kann.

Figuren 5 und 6 zeigen jeweils Beschichtungsprozesse, die alternativ oder supplementär angewendet werden können. Figur 5 zeigt, wie eines der achten Fleischerzeugnisse 11 durch einen anhand jeweiliger Düsen erzeugten Sprühnebel befördert werden. Diese Zeichnung ist als Abstraktion zu verstehen. Dem Fachmann sind diverse Möglichkeiten bekannt, eine voll umfängliche Beschichtung vorzunehmen. Insbesondere sind die Düsen derart angeordnet, dass selbstverständlich alle Seiten des Quaders beschichtet werden. Es resultieren beschichtete Fleischerzeugnisse, im Folgenden neunte Fleischerzeugnisse 12 genannt. Figur 6 zeigt ein Kleberbad, in welches die achten Fleischerzeugnisse 11 vollständig eingetunkt werden. Der Sprühnebel aus Figur 5 und das Bad aus Figur 6 enthalten jeweils den Kleber 13. Auch hierdurch entstehen die beschichteten neunten Fleischerzeugnisse 12.

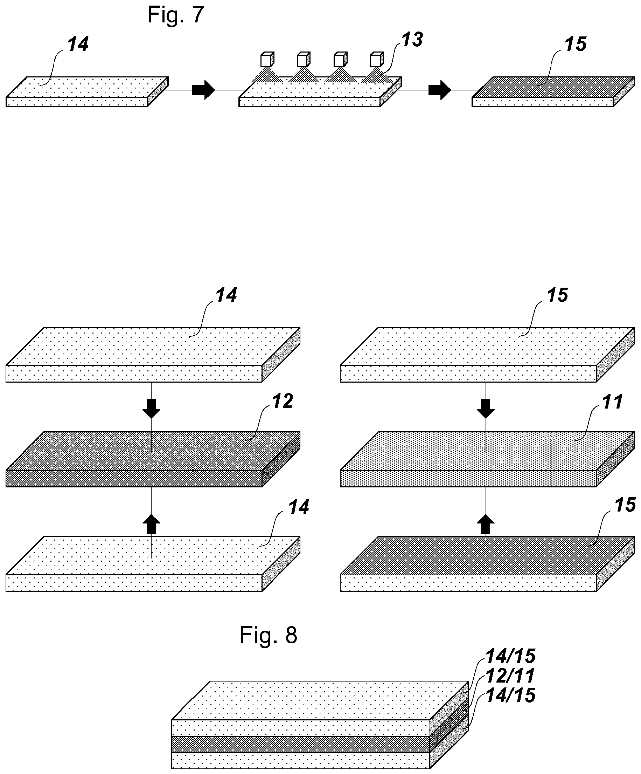

Als Alternative zu den mit den Figuren 5 und 6 erläuterten Vorgängen zeigt Figur 7 eine Beschichtung einer Grundfläche der Backwareneinheiten 14 mit Kleber. Hierbei durchlaufen die Backwareneinheiten 14 einen einseitigen Sprühnebel aus Kleber 13 und werden zu beschichteten Backwareneinheiten 15.

Ungeachtet des Ortes der Kleberapplikation wird, noch während die Kleberschicht an den neunten Fleischerzeugnissen 12 bzw. an den beschichteten Backwareneinheiten 15 flüssig ist, ein neuntes Fleischerzeugnis 12 bzw. ein achtes Fleischerzeugnis 11 bündig zwischen zwei Backwareneinheiten 14 bzw. beschichteten Backwareneinheiten 15 gelegt, wobei die drei Schichten dann zusammengepresst werden, siehe Figur 8. Kurz darauf erstarrt der Kleber und verbindet somit die beiden Backwareneinheiten fest mit dem Fleischerzeugnis. Insbesondere ist es für optimale Ergebnisse vorgesehen, die Schichten drei bis sechs Sekunden lang zusammenzupressen. Die Backwareneinheiten haben insbesondere eine Höhe von etwa 2 bis 10 mm, insbesondere 6 mm.

Das Fleischerzeugnis hat, zumindest im Vergleich zu den Backwareneinheiten, eine sehr glatte Oberfläche, auf der der Kleber gut anhaften kann. Damit der Kleber aber auch besser auf den Backwareneinheiten hält, kann hierfür eine spezielle Rezeptur vorgesehen sein. So ist es vorteilhaft, einen erhöhten Fettanteil für die Backware zu verwenden, insbesondere einen Anteil von 30 bis 50 % vom Mehlanteil. Dies erhöht die Mürbigkeit, d.h. die Feuchtigkeit und Zartheit der Backware. Eine weitere besondere Möglichkeit, die Kleberanhaftung zu verbessern besteht darin, ein Kochstück zu verwenden, das durch eine Mehlschwitze hergestellt und dann dem Teig zugefügt wird. Hierdurch wird die Feuchtigkeit konserviert und eine Saftigkeit der Backware gewährleistet. All diese Massnahmen sind für das Backen von Brot eher ungewöhnlich - für das erfinderische Verfahren sind sie jedoch von Vorteil. Weiterhin kann es vorteilhaft für die Kleberanhaftung sein, die Backwareneinheiten aus einer grossen Backwarenplatte mit einer präzisen und scharfen Säge auszuschneiden, wobei die Grundfläche, die den Kleber empfängt, von allfälligen Krümeln und Staub zu befreien ist.

Die Erfindung wurde zwar anhand ihrer bevorzugten Ausführungsform(en) erläutert, doch es können viele weitere Änderungen und Variationen vorgenommen werden, ohne über den durch den Gegenstand der beiliegenden Ansprüche definierten Umfang der vorliegenden Erfindung hinauszugehen. Daher ist es vorgesehen, dass die beiliegenden Patentansprüche Änderungen und Variationen abdecken, die im tatsächlichen Umfang der durch ihren Gegenstand definierten Erfindung enthalten sind.

## Patentansprüche

1. Ein Verfahren zur Herstellung eines geschichteten Nahrungsmittels, welches die folgenden Schritte aufweist:
- Wolfen einer Menge rohen Fleischs in einem Fleischwolf zu einem ersten Fleischerzeugnis,
- Herstellen eines zweiten Fleischerzeugnisses (2) durch Vermischen des ersten Fleischerzeugnisses mit einer Gewürzzusammensetzung,
- Einfüllen des zweiten Fleischerzeugnisses (2) in einen Einfülltrichter (3) einer Vakuumfüllmaschine (4),
- Verdichten des zweiten Fleischerzeugnisses (2) in der Vakuumfüllmaschine (4),
- Befördern des zweiten Fleischerzeugnisses (2) als drittes Fleischerzeugnis zu einem Füllstromteiler (6) unter einem Druck, der von einer Drehschieberpumpe in der Vakuumfüllmaschine (4) bereitgestellt wird,
- Aufteilen des dritten Fleischerzeugnisses in mindestens zwei Stränge eines vierten Fleischerzeugnisses im Füllstromteiler (6),
- Ausscheiden der Stränge aus dem Füllstromteiler als fünfte Fleischerzeugnisse (7), welche jeweils ein rechteckiges Profil aufweisen,
- Ablegen der fünften Fleischerzeugnisse (7) auf einem Gitterblech (8),
- Herstellen sechster Fleischerzeugnisse (9) durch Portionieren der fünften Fleischerzeugnisse (7) mit einem Schneidwerkzeug auf eine Länge, die zwischen 50 und 110% der Länge des Gitterblechs (8) entspricht,
- Einlagern des die sechsten Fleischerzeugnisse (9) tragenden Gitterblechs (8) in eine Reifekammer,
- Bereitstellen einer ersten Temperatur und einer Feuchtigkeit in der Reifekammer, wobei die erste Temperatur in einem ersten definierten Temperaturbereich liegt und wobei die Feuchtigkeit in einem definierten Feuchtigkeitsbereich liegt,
- Reifen der sechsten Fleischerzeugnisse (9) zu siebten Fleischerzeugnissen (10) über eine Reifedauer hinweg, die in einem ersten definierten zeitlichen Bereich liegt,
- Portionieren der siebten Fleischerzeugnisse (10) in eine Vielzahl quaderförmiger achter Fleischerzeugnisse (11),
- Bereitstellen zweier Backwareneinheiten (14), wobei jedes der Backwareneinheiten (14) eine Grundfläche aufweist, die zwischen 80 und 120% der Grundfläche eines achten Fleischerzeugnisses (11) entspricht,
- eines von:
o Herstellen neunter Fleischerzeugnisse (12) durch Applizieren eines Klebers (13) auf den achten Fleischerzeugnissen (11),
o Herstellen zweier beschichteter Backwareneinheiten (15) durch jeweiliges Applizieren eines Klebers (13) auf eine Grundfläche einer Backwareneinheit (14),
- Positionieren eines der achten (11) bzw. neunten (12) Fleischerzeugnisses zwischen den zwei Backwareneinheiten (14) bzw. beschichteten Backwareneinheiten (15), so dass der Kleber (13) jeweils zwischen einer Backwareneinheit (14) und dem neunten Fleischerzeugnis (12) bzw. zwischen einer beschichteten Backwareneinheit (15) und dem achten Fleischerzeugnis (11) angeordnet ist,
- Zusammenpressen der zwei das neunte Fleischerzeugnis (12) umgebenden Backwareneinheiten (14) bzw. der zwei das achte Fleischerzeugnis (11) umgebenden beschichteten Backwareneinheiten (15) mit einer definierten Kraft und für eine Zusammenpressdauer, die in einem zweiten definierten zeitlichen Bereich liegt.

2. Das Verfahren gemäss Anspruch 1, weiterhin aufweisend den Schritt:
- gewichtsbezogenes Vergleichmässigen des dritten Fleischerzeugnisses im Füllstromteiler.

3. Das Verfahren gemäss Anspruch 2, wobei das Vergleichmässigen basierend auf einer Verwendung einer Paddel-Mischwelle und/oder einer Spiral-Mischwelle erfolgt.

4. Das Verfahren gemäss Anspruch 2 oder 3, wobei das Vergleichmässigen basierend auf einer Verwendung zumindest einer integrierten Wiegezelle erfolgt.

5. Das Verfahren gemäss einer der vorhergehenden Ansprüche, weiterhin aufweisend den Schritt:
- Temperieren des dritten Fleischerzeugnisses im Füllstromteiler auf eine zweite Temperatur, die in einem zweiten definierten Temperaturbereich liegt.

6. Das Verfahren gemäss einer der vorhergehenden Ansprüche, weiterhin aufweisend den Schritt:
- durch Reibung während des Beförderns des dritten Fleischerzeugnisses erzeugtes Aussondern von Proteinen aus dem dritten Fleischerzeugnis.

7. Das Verfahren gemäss einer der vorhergehenden Ansprüche, weiterhin aufweisend den Schritt:
- Bereitstellen eines Räuchergases in der Reifekammer zumindest während eines Teils der Reifedauer.

8. Das Verfahren gemäss einer der vorhergehenden Ansprüche, wobei das Applizieren des Klebers ein Tunken der achten Fleischerzeugnisse in einem Kleberbad und/oder ein Besprühen und/oder ein Benetzen der achten Fleischerzeugnisse mit einem Klebersprühnebel umfasst.

9. Das Verfahren gemäss einer der vorhergehenden Ansprüche, wobei der Kleber Gelatine enthält.

10. Das Verfahren gemäss Anspruch 9, wobei der Kleber Genuss-Säure enthält, insbesondere zusätzlich Konservierungsstoffe.

11. Das Verfahren gemäss einer der vorhergehenden Ansprüche, wobei der Kleber frei von Farbstoffen, Aromen, Geschmacksverstärkern und gentechnisch veränderten Lebensmitteln ist.

12. Das Verfahren gemäss einer der vorhergehenden Ansprüche, weiterhin aufweisend den Schritt:
- Temperieren des Klebers auf eine dritte Temperatur, die in einem dritten definierten Temperaturbereich liegt.

## Claims

1. A method for producing a layered food product, comprising the following steps of:
- grinding a quantity of raw meat in a meat grinder to form a first meat product,
- producing a second meat product (2) by mixing the first meat product with a seasoning composition,
- filling the second meat product (2) into a hopper (3) of a vacuum filling machine (4),
- compacting the second meat product (2) in the vacuum filling machine (4),
- conveying the second meat product (2) as a third meat product to a filling flow divider (6) under a pressure which is provided by a rotary vane pump in the vacuum filling machine (4),
- dividing the third meat product into at least two strands of a fourth meat product in the filling flow divider (6),
- separating the strands from the filling flow divider as fifth meat products (7), each of which has a rectangular profile,
- depositing the fifth meat products (7) on a grid plate (8),
- producing sixth meat products (9) by portioning the fifth meat products (7) with a cutting tool to a length which corresponds to between 50 and 110% of the length of the grid plate (8),
- storing the grid plate (8) carrying the sixth meat products (9) in a maturing chamber,
- providing a first temperature and a humidity in the maturing chamber, wherein the first temperature lies within a first defined temperature range and wherein the humidity lies within a defined humidity range,
- maturing the sixth meat products (9) to form seventh meat products (10) over a maturing time which is within a first defined time range,
- portioning the seventh meat products (10) into a plurality of cuboidal eighth meat products (11),
- providing two bakery product units (14), wherein each of the bakery product units (14) has a base area corresponding to between 80 and 120% of the base area of an eighth meat product (11),
- one of:
∘ producing ninth meat products (12) by applying an adhesive (13) to the eighth meat products (11),
∘ producing two coated bakery product units (15) by applying an adhesive (13) to a base surface of a bakery product unit (14) in each case,
- positioning one of the eighth (11) or ninth (12) meat products between the two bakery product units (14) or coated bakery product units (15), so that the adhesive (13) is arranged in each case between a bakery product unit (14) and the ninth meat product (12) or between a coated bakery product unit (15) and the eighth meat product (11),
- pressing together the two bakery product units (14) surrounding the ninth meat product (12) or the two coated bakery product units (15) surrounding the eighth meat product (11) with a defined force and for a pressing-together duration which lies within a second defined time range.

2. The method according to claim 1, further comprising the step of:
- weight-related homogenizing of the third meat product in the filling flow divider.

3. The method according to claim 2, wherein the homogenizing is based on the use of a paddle mixing shaft and/or a spiral mixing shaft.

4. The method according to claim 2 or 3, wherein the homogenizing is based on the use of at least one integrated weighing cell.

5. The method according to one of the preceding claims, further comprising the step of:
- tempering the third meat product in the filling flow divider to a second temperature, which is in a second defined temperature range.

6. The method according to one of the preceding claims, further comprising the step of:
- separating proteins from the third meat product generated by friction during conveying of the third meat product.

7. The method according to one of the preceding claims, further comprising the step of:
- providing a smoking gas in the maturing chamber during at least part of the maturing period.

8. The method according to one of the preceding claims, wherein applying the adhesive comprises dipping the eighth meat products in an adhesive bath and/or spraying and/or wetting the eighth meat products with an adhesive spray.

9. The method according to one of the preceding claims, wherein the adhesive comprises gelatin.

10. The method according to claim 9, wherein the adhesive contains edible acid, in particular additionally preservatives.

11. The method according to one of the preceding claims, wherein the adhesive is free from colorants, flavorings, flavor enhancers and genetically modified foods.

12. The method according to one of the preceding claims, further comprising the step of:
- tempering the adhesive to a third temperature, which is in a third defined temperature range.

## Revendications

1. Procédé pour fabriquer un produit alimentaire en plusieurs couches, comprenant les étapes suivantes :
- hachage d'une quantité de viande crue dans un hachoir pour obtenir un premier produit à base de viande,
- fabrication d'un deuxième produit à base de viande (2) en mélangeant le premier produit à base de viande avec une composition d'épices,
- introduction du deuxième produit à base de viande (2) dans un entonnoir de remplissage (3) d'une machine de remplissage sous vide (4),
- tassement du deuxième produit à base de viande (2) dans la machine de remplissage sous vide (4),
- transport du deuxième produit à base de viande (2) sous la forme d'un troisième produit à base de viande vers un diviseur de flux de remplissage (6) sous une pression fournie par une pompe à tiroirs rotatifs dans la machine de remplissage sous vide (4),
- division du troisième produit à base de viande en au moins deux boudins d'un quatrième produit à base de viande dans le diviseur de flux de remplissage (6),
- découpe des boudins sortant du diviseur de flux de remplissage en cinquièmes produits à base de viande (7) présentant un profil rectangulaire,
- dépose des cinquièmes produits à base de viande (7) sur une tôle perforée (8),
- fabrication de sixièmes produits à base de viande (9) par la découpe en portions des cinquièmes produits à base de viande (7) avec un outil de coupe à une longueur correspondant à 50 % à 110 % de la longueur de la tôle perforée (8),
- rangement de la tôle perforée (8) portant les sixièmes produits à base de viande (9) dans une chambre de maturation,
- établissement d'une première température et d'une humidité dans la chambre de maturation, la première température se situant dans une première plage de température définie et l'humidité se situant dans une plage d'humidité définie,
- maturation des sixièmes produits à base de viande (9) pour obtenir des septièmes produits à base de viande (10) au-delà d'une durée de maturation située dans une première plage de temps définie,
- partage des septièmes produits à base de viande (10) en portions pour obtenir de multiples huitièmes produits à base de viande (11) de forme carrée,
- préparation de deux pâtons boulangers (14), chacun des pâtons (14) présentant une aire en plan correspondant à 80 % à 120 % de l'aire en plan d'un huitième produit à base de viande (11),
- soit :
o fabrication de neuvièmes produits à base de viande (12) par application d'une colle (13) sur les huitièmes produits à base de viande (11), soit
o fabrication de deux pâtons enduits (15) par application d'une colle (13) sur une surface de base d'un pâton (14),
- positionnement de l'un des huitièmes (11) ou neuvièmes (12) produits à base de viande entre les deux pâtons (14) ou pâtons enduits (15), de telle manière que la colle (13) soit disposée entre un pâton (14) et le neuvième produit à base de viande (12) ou entre un pâton enduit (15) et le huitième produit à base de viande (11),
- assemblage par pressage des deux pâtons (14) entourant le neuvième produit à base de viande (12) ou des deux pâtons enduits (15) entourant le huitième produit à base de viande (11) sous une forme définie et pendant une durée de pressage qui se situe dans une deuxième plage de temps définie.

2. Procédé selon la revendication 1, comprenant en outre l'étape suivante :
- homogénéisation en poids du troisième produit à base de viande dans le diviseur de flux de remplissage.

3. Procédé selon la revendication 2, dans lequel l'homogénéisation est effectuée en utilisant un arbre mélangeur à palettes et/ou un arbre mélangeur hélicoïdal.

4. Procédé selon la revendication 2 ou 3, dans lequel l'homogénéisation est effectuée en utilisant au moins une cellule de pesage intégrée.

5. Procédé selon l'une des revendications précédentes, comprenant en outre l'étape suivante :
- tempèrent le troisième produit à base de viande dans le diviseur de flux de remplissage à une deuxième température située dans une deuxième plage de température définie.

6. Procédé selon l'une des revendications précédentes, comprenant en outre l'étape suivante :
- séparation de protéines du troisième produit à base de viande par le frottement au cours du transport du troisième produit à base de viande.

7. Procédé selon l'une des revendications précédentes, comprenant en outre l'étape suivante :
- apport d'un gaz de fumage dans la chambre de maturation, au moins pendant une partie de la durée de maturation.

8. Procédé selon l'une des revendications précédentes, dans lequel l'application de la colle comprend un trempage des huitièmes produits à base de viande dans un bain de colle et/ou une pulvérisation et/ou un mouillage des huitièmes produits à base de viande avec un brouillard de colle pulvérisée.

9. Procédé selon l'une des revendications précédentes, dans lequel la colle contient de la gélatine.

10. Procédé selon la revendication 9, dans lequel la colle contient de l'acide alimentaire, en particulier des conservateurs supplémentaires.

11. Procédé selon l'une des revendications précédentes, dans lequel la colle ne contient pas de colorants, d'arômes, d'exhausteurs de goût ni de denrées alimentaires génétiquement modifiées.

12. Procédé selon l'une des revendications précédentes, comprenant en outre l'étape suivante :
- tempèrent la colle à une troisième température qui se situe dans une troisième plage de température définie.
